# EUROPEAN PATENT APPLICATION

(11) **EP 3 511 066 A1**
(43) Date of publication of application: **17.07.2019**
(21) Application number: 17848524.9
(22) Date of filing: 14.08.2017
(51) Int. Cl.: B01D 29/11, B01D 29/07, B01D 35/02, B01D 35/30

(54) **FILTER DEVICE**

(30) Priority: 09.09.2016 JP 2016176138
(71) Applicant: Yamashin-Filter Corp., Yokohama-shi, Kanagawa 231-0062 (JP)
(72) Inventor: KOMINE Akiyoshi, Yokohama-shi Kanagawa 235-0033 (JP); KITAJIMA Nobuyuki, Yokohama-shi Kanagawa 235-0033 (JP)
(74) Representative: Winter, Brandl, Fürniss, Hübner, Röss, Kaiser, Polte - Partnerschaft mbB
(86) International application number: PCT/JP2017/029256
(87) International publication number: WO 2018/047580

(57) **Abstract**

Water or foreign matter can be prevented from entering a threaded engagement portion. When a first screw part formed in the vicinity of an opening end of a casing is threadedly engaged with a second screw part formed on a head, a filter element assembly is attached to the head, and an elastic member provided in a recessed part disposed adjacently with the first screw part on a face on which the first screw part is formed in the casing deforms along convex-concave shape of the second screw part.

## Description

### Technical Field

The present invention relates to a filter device.

### Background Art

Patent Document 1 discloses a filter device in which a filter cartridge configured to house a filter element in a casing is detachably attached to a head including an inflow port and an outflow port. In the filter device described in Patent Document 1, the filter cartridge is detachably attached to the head via a nut provided on the outer circumference of the casing.

### Citation List

### Patent Document

Patent Document 1: JP 4033739 B

### Summary of Invention

### Technical Problem

However, in the invention described by Patent Document 1, water or foreign matter might be mixed into a threaded engagement portion between the nut and the head.

The present invention has been made in view of this problem, and it is an object of the present invention to provide a filter device capable of preventing water or foreign matter entering a threaded engagement portion.

### Solution to Problem

In order to solve the aforementioned problems, a filter device according to the present invention includes, for example, a head including an inflow port and an outflow port; a filter element assembly including a casing having a substantially bottomed cylindrical shape, a first screw part formed on an inner circumferential face or an outer circumferential face of the casing and formed in a vicinity of an opening end of the casing, and a filter element provided inside the casing; and a substantially disc-shaped elastic member formed of an elastically deformable material, wherein a second screw part threadedly engaged with the first screw part is formed in the head, a recessed part disposed adjacently with the first screw part is formed on a face on which the first screw part is formed in the casing, the elastic member is provided in the recessed part, and when the first screw part and the second screw part are threadedly engaged, the filter element assembly is attached to the head, and the elastic member deforms along a convex-concave shape of the second screw part and seals gap between the casing and the head.

Regarding the filter device according to the present invention, when the first screw part formed in the vicinity of the opening end of the casing is threadedly engaged with the second screw part formed on the head, the filter element assembly is attached to the head, and the elastic member provided on the face on which the first screw part is formed in the casing deforms along the convex-concave shape of the second screw part. This allows the gap between the casing and the head to be sealed, and water or foreign matter can be prevented from entering the threaded engagement portion (the first screw part and the second screw part).

Herein, the recessed part is formed in such a manner as to cut out part of a leading end face substantially orthogonal to the inner circumferential face or the outer circumferential face of the casing, and when the filter element assembly is attached to the head, the elastic member may seal gap between the leading end face and the head. Thus, the gap between the casing and the head can be sealed with a plurality of directions, and water or foreign matter can be securely prevented from being mixed into the threaded engagement portion.

Herein, the elastic member may have a substantially U-shaped cross section and be provided in the casing in such a manner as to cover the leading end face. Thus, the gap between the casing and the head can be sealed with a plurality of directions, and water or foreign matter can be securely prevented from being mixed into the threaded engagement portion. In addition, the elastic member is provided in the casing so as to cover the leading end face, hence the elastic member can be easily attached to the filter element assembly, and the filter element assembly can be easily attached to the head.

### Advantageous Effects of Invention

According to the present invention, water or foreign matter can be prevented from entering the threaded engagement portion.

### Brief Description of Drawings

FIG. 1 is a cross section illustrating the overview of a filter device 1 of an embodiment of the present invention.
FIG. 2 is a cross-sectional view illustrating the overview of the filter device 1 of which a part is enlarged and displayed.
FIG. 3 is a cross-sectional view illustrating the overview of a filter element assembly 20.
FIG. 4 is a cross-sectional view illustrating the overview of a filter device 2 of which a part is enlarged and displayed.
FIG. 5 is a cross-sectional view illustrating the overview of a filter device 3 of which a part is enlarged and displayed.

### Description of Embodiments

Detailed description of embodiments of the present invention will be given with reference to drawings below.

### First Embodiment

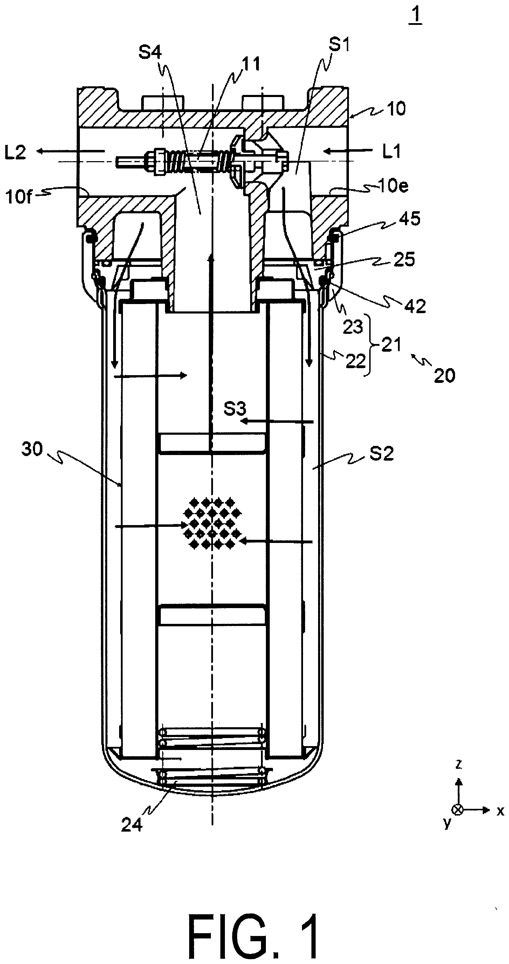

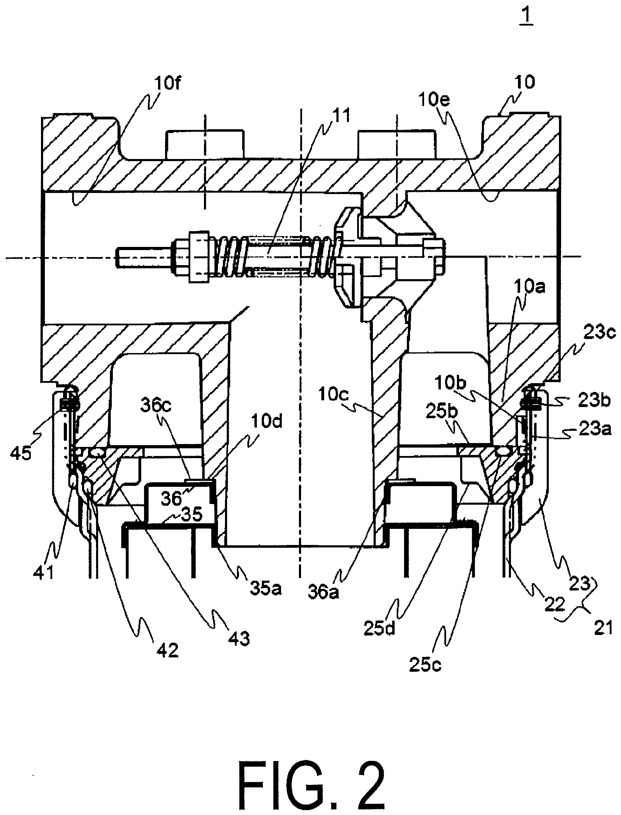

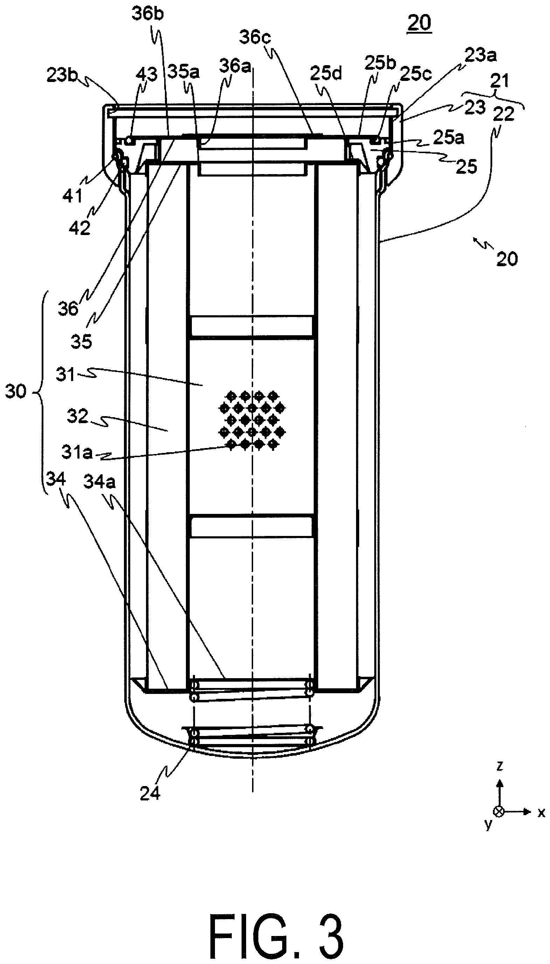

FIG. 1 is a cross-sectional view illustrating the overview of a filter device 1 of a first embodiment of the present invention. FIG. 2 is a cross-sectional view illustrating the overview of the filter device 1 of which a part is enlarged and displayed. FIG. 3 is a cross-sectional view illustrating the overview of a filter element assembly 20. Note that, in FIGS. 1 to 3, hatching which indicates a cross section is partially omitted.

The filter device 1 mainly includes a head 10 and the filter element assembly 20.

The head 10 is a member having a substantially bottomed cylindrical shape and formed of metal. The head 10 includes an inflow port and an outflow port. Hereinafter, the detail of the head 10 will be described with reference to FIG. 2.

An attachment part 10a having a substantially cylindrical shape and formed in such a manner as to protrude from a bottom face to a lower side (- z side) is formed on a side face of the head 10. A male screw part 10b is formed on the outer circumferential face of the attachment part 10a.

The head 10 includes a fitting cylinder 10c having a substantially cylindrical shape and formed in such a manner as to protrude from the bottom face to the lower side (- z side) on the inner side of the attachment part 10a. The fitting cylinder 10c is inserted into cylindrical parts 35a and 36a (described later) of plates 35 and 36. A plane 10d abutted with a filter element 30 is formed on the outer circumference of the fitting cylinder 10c.

In the head 10, an inflow part 10e that allows hydraulic oil to flow into the inside of the filter device 1 and an outflow part 10f that allows the hydraulic oil to flow out to the outside of the filter device 1 are formed.

A valve 11 is provided on a wall face between the inflow part 10e and the outflow part 10f on the bottom face of the head 10. The valve 11 opens and closes in accordance with a difference between pressure inside the inflow part 10e and pressure inside the outflow part 10f. Known techniques can be applied to the valve 11, and thus the detailed description thereof will be omitted.

The description will now return to FIG. 1. The filter element assembly 20 mainly includes a casing 21, a press ring 25, and the filter element 30. Hereinafter, the filter element assembly 20 will be described with reference to FIG. 3.

The casing 21 is a substantially bottomed cylindrical member formed of metal, one end of which is substantially closed, the other end of which is opened. The casing 21 includes a casing main body 22 having a substantially bottomed cylindrical shape and a cover 23 having a substantially cylindrical shape.

The filter element 30 is provided inside the casing main body 22. In addition, a spring 24, one end of which is abutted with the bottom face of the casing main body 22, the other end of which is abutted with the filter element 30, is provided inside the casing main body 22.

The cover 23 is provided in the vicinity of an opening in the casing main body 22. The inner circumferential face of the cover 23 is fitted with the outer circumferential face of the casing main body 22, which allows the casing main body 22 and the cover 23 to be integrated.

An elastic member (e.g., an O-ring) 41 is provided between the outer circumferential face of the casing main body 22 and the inner circumferential face of the cover 23, and gap between the casing main body 22 and the cover 23 is sealed by the elastic member 41.

A female screw part 23a is formed on the inner circumferential face of the cover 23. The female screw part 23a is formed in the vicinity of an opening end of the cover 23 (that is, the casing 21). When the female screw part 23a is threadedly engaged with the male screw part 10b, the casing 21 is attached to the head 10.

A recessed part 23b is formed on the inner circumferential face (face in which the female screw part 23a is formed) of the cover 23. The recessed part 23b and the female screw part 23a are adjacently disposed. Note that, preferably, the recessed part 23b is provided in the vicinity of a leading end on a side where the cover 23 is not abutted with the casing main body 22. An elastic member 45 (see FIGS. 1 and 2) is provided in the recessed part 23b. The elastic member 45 is a substantially disc-shaped member formed of an elastically deformable material.

The press ring 25 is provided on the inner side of the casing 21 (the casing main body 22 and the cover 23). The press ring 25 is a substantially circular plate-shaped member including a hole formed in the center thereof.

A male screw part 25a is formed on the outer circumferential face of the press ring 25. When the male screw part 25a is threadedly engaged with the female screw part 23a, the press ring 25 is attached to the casing 21, thereby forming the filter element assembly 20.

An elastic member (e.g., an O-ring) 42 is provided between the outer circumferential face of the press ring 25 and the inner circumferential face of the casing main body 22, and gap between the casing main body 22 and the press ring 25 is sealed by the elastic member 42.

A recessed part 25c is formed on an upper end face 25b of the press ring 25. An elastic member (e.g., an O-ring) 43 is provided in the recessed part 25c.

After the spring 24 and the filter element 30 are inserted into the casing 21, the press ring 25 is attached to the casing 21. The filter element is pressed upward (+ z direction) by the energizing force of the spring 24, and thus the filter element 30 is abutted with a plane part 25d formed on the lower end face of the press ring 25.

The filter element 30 mainly includes an inner tube 31, a filtration member 32, and plates 34, 35 and 36 provided on the inner tube 31, the filtration member 32, and both ends of the filtration member 32.

The inner tube 31 is a member having a substantially hollow cylindrical shape and formed of a material with high corrosion resistance (resin in the present embodiment). Multiple holes 31a through which the hydraulic oil passes are formed on the entire face of the inner tube 31.

The filtration member 32 has a substantially hollow cylindrical shape having a thickness in the radial direction thereof. The filtration material 32 is formed by pleating sheet-like filter paper using synthetic resin, paper, or the like, and connecting both ends of the pleated filter paper to form a cylindrical shape. The filtration material 32 is provided on the outer side of the inner tube 31.

The plate 34 is provided at one ends (lower ends) of the inner tube 31 and the filtration material 32, and the plate 35 is provided at the other ends (upper ends). The plate 34 and the plate 35 are substantially bottomed cylindrical members, and are formed using a material with high corrosion resistance.

A recessed part 34a is formed in the center of the plate 34. The spring 24 is abutted on (- z) side of the recessed part 34a.

The plate 36 is provided on the upper (+ z) side of the plate 35. The cylindrical parts 35a and 36a having a substantially cylindrical shape are provided in the center of the plates 35 and 36, respectively. A convex face 36c is formed on the upper face 36b of the plate 36 in such a manner to surround the cylindrical part 36a.

Next, the assembling of the filter device 1 configured as described above will be described with reference to FIG. 2. The female screw part 23a formed in the cover 23 is threadedly engaged with the male screw part 10b formed on the head 10, so that the casing 21 is attached to the head 10.

Since the elastic member 45 is provided in the recessed part 23b formed in the cover 23, when the casing 21 is attached to the head 10, the elastic member 45 deforms along the convex-concave shape of the male screw part 10b. As a result, gap between the casing 21 and the head 10 is sealed by the elastic member 45.

In addition, when the casing 21 is attached to the head 10, the fitting cylinder 10c is inserted into the cylindrical parts 35a and 36a of the plates 35 and 36, and the plane 10d presses the convex face 36c in the (- z) direction. As a result, the filter element 30 is positioned inside the casing 21. In addition, gap between the head 10 and the press ring 25 (that is, the filter element assembly 20) is sealed by the elastic member 43 provided in the recessed part 25c.

Next, the filtration function of the filter device 1 will be described with reference to FIG. 1. The arrows in FIG. 1 indicate the flow of the hydraulic oil inside the filter device 1.

Hydraulic oil L1 to be filtered, among the hydraulic oil, passes through the inflow part 10e and flows into a space S1. The hydraulic oil L1 that has flown into the space S1, flows into a space S2 between the casing 21 and the filter element 30.

Subsequently, the hydraulic oil L1 sequentially passes the filtration member 32 and the inner tube 31 and flows into a space S3, which is the internal space of the inner tube 31. The hydraulic oil L1 is filtered by the filtration member 32. Filtered hydraulic oil L2 that has flown into the space S3 passes through a space S4 and the outflow part 10f and is discharged out of the filter device 1.

In a case where the filter device 1 is continuously used, dust adheres to the filtration member 32, which increases a difference in pressure between the space S1 and the space S4. In a case where a difference in pressure between the space S1 and the space S4 is equal to or higher than a certain threshold value (threshold value can be set to a freely selected value), the valve 11 opens, and the hydraulic oil L1 is discharged to the space S4.

According to the present embodiment, the elastic member 45 deforms along the convex-concave shape of the male screw part 10b, and gap between the male screw part 10b and the cover 23 is sealed. Thus, water or foreign matter can be prevented from entering the male screw part 10b and the female screw part 23a (hereinafter referred to as "threaded engagement portion").

Even when the elastic member 45 is not provided, the elastic member 42 is provided between the outer circumferential face of the press ring 25 and the inner circumferential face of the casing main body 22, water or foreign matter is prevented from entering into the casing 21, and oil is prevented from leaking out of the casing 21. However, when water enters the threaded engagement portion, an area on the outer side of the elastic member 42 (see two-dot chain lines in FIG. 2) might rust. When the formation of rust occurs, not only the male screw part 10b, the female screw part 23a, or the male screw part 25a but also surfaces including the inner circumferential face of the casing main body 22 and the outer circumferential face of the press ring 25 are corroded and become coarse.

In a state where the filter element assembly 20 is attached to the head 10, the internal pressure of the casing 21 increases. Thus, when the area on the outside with respect to the elastic member 42 rusts, and the elastic member 42 receives pressure and moves to the outside, the deformation amount of the elastic member 42 is reduced, which might reduce sealability, and cause the oil to leak from the inside to the outside. In addition, when foreign matter is mixed into the threaded engagement portion, and threaded engagement is released, the surface of the male screw part 10b or the female screw part 23a might be damaged.

In contrast, in the present embodiment, water or foreign matter is prevented from entering the threaded engagement portion, trouble such as leakage of oil can be prevented.

Note that, in the present embodiment, the female screw part 23a is formed on the inner circumferential face of the cover 23, and the male screw part 10b is formed on the outer circumferential face of the attachment part 10a, but the male screw part may be formed on the outer circumferential face of the cover 23, and the female screw part may be formed on the inner circumferential face of the attachment part 10a. In this case, a recessed part for providing the elastic member is only required to be formed on the outer circumferential face of the cover 23 while being disposed adjacently to the male screw part.

### Second Embodiment

In the first embodiment of the present invention, the elastic member 45 is provided in the recessed part 23b formed on the inner circumferential face of the cover 23 to seal the threaded engagement portion, but a method of sealing the threaded engagement portion is not limited to this.

In a second embodiment of the present invention, gap between the leading end face of the casing and the head is sealed by an elastic member, in addition to the threaded engagement portion between the casing and the head. Hereinafter, a filter device 2 according to the second embodiment of the present invention will be described. A difference between the filter device 1 and the filter device 2 is only a cover and an elastic member, and thus a cover 23A and an elastic member 46 of the filter device 2 will be described. The same sign is applied to the same part as the first embodiment, and the description of the same part will be omitted.

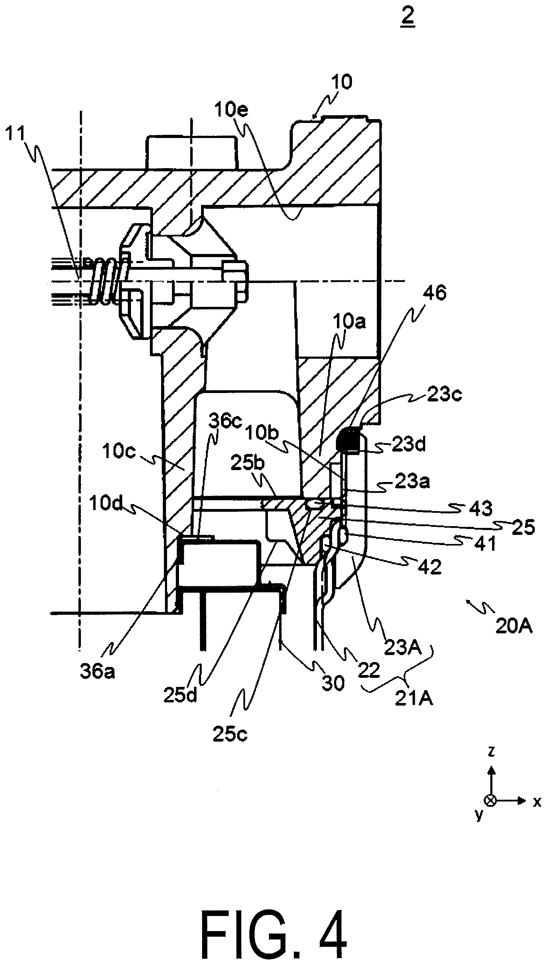

FIG. 4 is a cross-sectional view illustrating the overview of the filter device 2 of which a part is enlarged and displayed. The filter device 2 mainly includes the head 10 and a filter element assembly 20A. The filter element assembly 20A mainly includes a casing 21A, the press ring 25, and the filter element 30. The casing 21A includes the casing main body 22 and a cover 23A having a substantially cylindrical shape.

Only a difference between the cover 23A and the cover 23 lies in the position of a recessed part. A recessed part 23d is formed in the cover 23A in such a manner as to cut out part of a leading end face 23c substantially orthogonal to the inner circumferential face or the outer circumferential face of the cover 23A (that is, the casing 21A).

An elastic member 46 is provided in the recessed part 23d. The elastic member 46 is a substantially disc-shaped member formed of an elastically deformable material.

When the female screw part 23a formed in the cover 23 is threadedly engaged with the male screw part 10b formed on the head 10, and the casing 21A is attached to the head 10, the inner circumferential part of the elastic member 46 deforms along the convex-concave shape of the male screw part 10b. As a result, gap between the inner circumferential face of the casing 21 and the outer circumferential face of the head 10 is sealed by the elastic member 46.

Further, when the casing 21 is attached to the head 10, the elastic member 46 deforms in the thickness direction thereof (z direction). As a result, gap between the leading end face 23c of the casing 21 and the head 10 is sealed by the elastic member 46.

According to the present embodiment, the gap between the casing 21 and the head 10 is sealed with a plurality of directions, so that water or foreign matter can be securely prevented from being mixed into the threaded engagement portion.

### Third Embodiment

Similar to the second embodiment, in a third embodiment of the present invention, gap between the leading end face of the casing and the head is sealed by an elastic member, in addition to the threaded engagement portion between the casing and the head. Hereinafter, a filter device 3 according to the third embodiment of the present invention will be described. A difference between the filter device 1 and the filter device 3 lies in only a cover and an elastic member, and thus a cover 23B and an elastic member 47 of the filter device 3 will be described hereinafter. The same sign is applied to the same part as the first embodiment, and the description of the same part will be omitted.

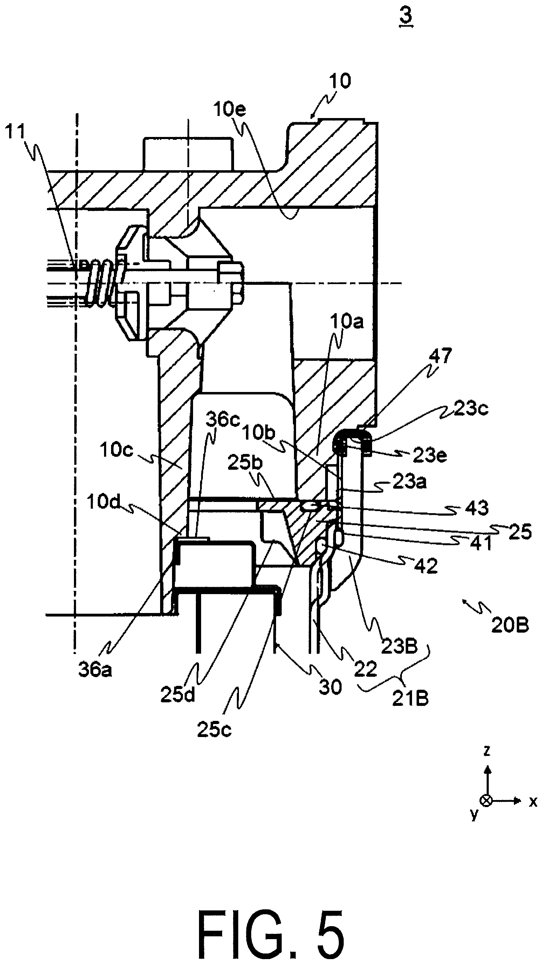

FIG. 5 is a cross-sectional view illustrating the overview of the filter device 3 of which a part is enlarged and displayed. The filter device 2 mainly includes the head 10 and a filter element assembly 20B. The filter element assembly 20B mainly includes a casing 21B, the press ring 25, and the filter element 30. The casing 21B includes the casing main body 22 and a cover 23B having a substantially cylindrical shape.

Only a difference between the cover 23B and the cover 23 lies in the position of a recessed part. A recessed part 23e is formed in the cover 23B in such a manner as to cut out part of the leading end face 23c substantially orthogonal to the inner circumferential face or the outer circumferential face of the cover 23B (that is, the casing 21B).

The elastic member 47 is a substantially disc-shaped member formed of an elastically deformable material. The elastic member 47 has a substantially U-shaped cross section and is provided in the cover 23B so as to cover the leading end face 23c and the recessed part 23e.

When the female screw part 23a formed in the cover 23 is threadedly engaged with the male screw part 10b formed on the head 10, and the casing 21B is attached to the head 10, the inner circumferential part of the elastic member 47 deforms along the convex-concave shape of the male screw part 10b. As a result, gap between the inner circumferential face of the casing 21 and the outer circumferential face of the head 10 is sealed by the elastic member 47.

Further, when the casing 21 is attached to the head 10, the elastic member 47 covers gap between the leading end face 23c of the casing 21 and the head 10. As a result, the gap between the leading end face 23c of the casing 21 and the head 10 is sealed by the elastic member 47.

According to the present embodiment, the gap between the casing 21 and the head 10 is sealed with a plurality of directions, so that water or foreign matter can be securely prevented from being mixed into the threaded engagement portion. In addition, the elastic member 47 is provided in the cover 23B so as to cover the leading end face 23c and the recessed part 23e, and thus the elastic member 47 is easily attached to the filter element assembly 20B, and the filter element assembly 20B is easily attached to the head 10.

Embodiments of the invention have been described in detail with reference to the drawings. However, specific configurations are not limited to the embodiments, and changes in the design or the like are also included within a scope not departing from the gist of the invention. For example, the above examples have been explained in detail in order to facilitate understanding of the present invention and are not necessarily limited to examples provided with the entirety of the configuration described above. In addition, the configuration of an embodiment may be partially replaced with the configuration of a different embodiment, or the configuration of the different embodiment may be added to, deleted from, or replaced with the configuration of the embodiment.

Further, the term "substantially" in the present invention is not to be understood as merely being strictly the same, and is a concept that includes variations and modifications to an extent that does not result in loss in identity. For example, a term "substantially cylindrical shape" is not strictly limited to a cylindrical shape. Further, for example, when a term "substantially center" is simply expressed, the term includes not only the strict center but also an approximately center. Furthermore, the meaning of the term "vicinity" in the present invention includes a range of regions (which can be determined as desired) near a position serving as a reference. For example, a term "a vicinity of an opening end" refers to a range of regions near the opening end, and is a concept indicating that the opening end may or may not be included.

### Reference Signs List

1, 2, 3 Filter device
10 Head
10a Attachment part
10b Male screw part
10c Fitting cylinder
lOd Plane
10e Inflow part
10f Outflow part
11 Valve
20, 20A, 20B Filter element assembly
21, 21A, 21B Casing
22 Casing main body
23, 23A, 23B Cover
23a Female screw part
23b, 23d, 23e Recessed part
23c Leading end face
24 Spring
25 Press ring
25a Male screw part
25b Upper end face
25c Recessed part
25d Plane part
30 Filter element
31 Inner tube
31a Hole
32 Filtration member
34, 35, 36 Plate
34a Recessed part
35a, 36a Cylindrical part
36b Upper face
36c Convex face
41, 42, 43, 44, 45, 46, 47 Elastic member

## Claims

1. A filter device comprising:
a head including an inflow port and an outflow port;
a filter element assembly including a casing having a substantially bottomed cylindrical shape, a first screw part formed on an inner circumferential face or an outer circumferential face of the casing and formed in a vicinity of an opening end of the casing, and a filter element provided inside the casing; and
a substantially disc-shaped elastic member formed of an elastically deformable material,
wherein a second screw part threadedly engaged with the first screw part is formed in the head,
a recessed part disposed adjacently with the first screw part is formed on a face on which the first screw part is formed in the case,
the elastic member is provided in the recessed part, and
when the first screw part and the second screw part are threadedly engaged, the filter element assembly is attached to the head, and the elastic member deforms along convex-concave shape of the second screw part and seals gap between the casing and the head.

2. The filter device according to claim 1,
wherein the recessed part is formed in such a manner as to cut out part of a leading end face substantially orthogonal to the inner circumferential face or the outer circumferential face of the casing, and
when the filter element assembly is attached to the head, the elastic member seals gap between the leading end face and the head.

3. The filter device according to claim 2,
wherein the elastic member has a substantially U-shaped cross section and is provided in the casing in such a manner as to cover the leading end face.
